# EUROPÄISCHE PATENTSCHRIFT

(11) **EP 3 734 112 B1**
(45) Veröffentlichungstag und Bekanntmachung des Hinweises auf die Patenterteilung: **11.09.2024**
(21) Anmeldenummer: 19171876.6
(22) Anmeldetag: 30.04.2019
(51) Int. Cl.: F16H 1/46, F16H 57/08, F16D 1/033, F16D 1/076, F16H 57/02, F16D 1/10

(54) **PLANETENGETRIEBE**
PLANETARY GEAR
ENGRANAGE PLANÉTAIRE

(43) Veröffentlichungstag der Anmeldung: 04.11.2020
(73) Patentinhaber: Flender GmbH, 46395 Bocholt (DE)
(72) Erfinder: Gettler, Ralf, 46325 Borken (DE); Holweger, Dirk, 40629 Düsseldorf (DE)
(74) Vertreter: Michalski Hüttermann & Partner Patentanwälte mbB

(56) Entgegenhaltungen:
- DE-A1- 102016 202 533
- DE-U1- 9 202 238

## Beschreibung

Die Erfindung betrifft ein Planetengetriebe mit zumindest zwei Getriebestufen, wobei eine Sonnenwelle einer Planetenstufe zur Drehmomentübertragung über eine Kupplungsverzahnung mit einem Planetenträger einer auf diese Planetenstufe folgenden weiteren Planetenstufe verbunden ist. Ferner betrifft die Erfindung einen Antriebsstrang, in dem ein entsprechendes Planetengetriebe als Getriebe eingesetzt ist, eine Windkraftanlage, die mit einem solchen Antriebsstrang ausgerüstet ist, und eine Industrie-Applikation, die als Getriebe über ein solches Planetengetriebe verfügt.

Aus der DE 10 2016 202 533 A1 ist ein Planetengetriebe eingangs definierter Art bekannt. Das deutsche Gebrauchsmuster DE 92 02 238 zeigt eine mittels einer Hirth-Verzahnung geteilte Welle, die ausgangsseitig mit einem Planetenträger eines Planetengetriebes verbunden ist.

Es ist eine Aufgabe der vorliegenden Erfindung, ein Planetengetriebe, einen Antriebsstrang, eine Windkraftanlage und eine Industrie-Applikation der eingangs genannten Art verbesserter Bauart zu schaffen.

Zur Lösung dieser Aufgabe schafft die vorliegende Erfindung ein Planetengetriebe der eingangs genannten Art, das dadurch gekennzeichnet ist, dass es sich bei der Kupplungsverzahnung um eine Plankerbverzahnung handelt. Dank des erfindungsgemä-ßen Einsatzes einer solchen Plankerbverzahnung, die häufig auch als Stirnverzahnung bezeichnet wird, ist es möglich, bezogen auf eine Hauptdrehachse axial und/oder radial Bauraum einzusparen, was die Auslegung des Planetengetriebes basierend auf einer vom Kunden vorgegebenen Gesamtabmessung deutlich erleichtert.

Erfindungsgemäß sind die die Plankerbverzahnung bildenden Stirnverzahnungen einerseits an einer Stirnseite der Sonnenwelle und andererseits an einer bezogen auf die Hautdrehachse axial an dieser Stirnseite der Sonnenwelle anliegenden Stirnseite des Planetenträgers vorgesehen. Bei dieser Variante sind die Sonnenwelle und der Planetenträger stirnseitig also direkt über die Plankerbverzahnung miteinander verbunden, was das Vorsehen einer Nabe an dieser Stelle überflüssig macht. Dies ermöglicht zum einen eine Bauraumeinsparung in bezogen auf die Hauptdrehachse axialer sowie radialer Richtung. Zum anderen ist die Herstellung des Planetenträgers sehr günstig, da für diesen wenig Material benötigt wird. Darüber hinaus ist er für die Bearbeitung sehr gut zugänglich.

Die Sonnenwelle und der Planetenträger sind erfindungsgemäß unter Verwendung von sich bezogen auf die Hauptdrehachse axial erstreckenden Befestigungselementen aneinander befestigt, die bevorzugt in regelmäßigen Abständen zueinander positioniert sind. Vorteilhaft handelt es sich bei den Befestigungselementen um Befestigungsschrauben, die auf einem gemeinsamen Lochkreis positioniert sind. Mit derartigen Befestigungsschrauben wird eine besonders einfache und preiswerte axiale Sicherung der Verbindung von Sonnenwelle und Planetenträger realisiert.

Erfindungsgemäß erstrecken sich die Befestigungselemente durch die Plankerbverzahnung. Auf diese Weise kann insbesondere dann bezogen auf die Hauptdrehachse radialer Bauraum eingespart werden, wenn die Sonnenwelle als Hohlwelle ausgebildet ist.

Gemäß einer weiteren, nicht beanspruchten Variante des Planetengetriebes sind die die Plankerbverzahnung bildenden Stirnverzahnungen einerseits an einer Stirnseite einer drehfest am Außenumfang der Sonnenwelle befestigten Nabe und andererseits an einer axial an dieser Stirnseite der Sonnenwelle anliegenden Stirnseite des Planetenträgers vorgesehen. Bei dieser Variante sind die Sonnenwelle und der Planetenträger somit mittelbar über eine am Außenumfang der Sonnenwelle angeordnete Nabe miteinander verbunden, wobei die Plankerbverzahnung an der Nabe und an dem Planetenträger vorgesehen ist. Diese Bauart ermöglicht aufgrund der Trennung von Nabe und Planetenträger Dank der besseren Zugänglichkeit der Einzelkomponenten eine einfachere und preiswertere Herstellung und Bearbeitung derselben, ggf. auch unter Einsatz anderer Maschinen. Zudem können die Bearbeitung der Nabe und die des Planetenträgers getrennt beauftragt und so Bearbeiter ausgewählt werden, die für die jeweilige Bearbeitung optimal aufgestellt sind. Auch können Logistikkosten eingespart werden, da derzeit häufig der gesamte Planetenträger zur Bearbeitung des Nabenabschnitts über weite Strecken transportiert werden muss. Bevorzugt sind auch bei der zweiten Variante die Nabe und der Planetenträger unter Verwendung von sich bezogen auf die Hauptdrehachse axial erstreckenden Befestigungselementen aneinander befestigt, die insbesondere in regelmäßigen Abständen zueinander positioniert sind. Vorteilhaft handelt es sich bei den Befestigungselementen um Befestigungsschrauben, die auf einem gemeinsamen Lochkreis positioniert sind.

Vorteilhaft erstrecken sich die Befestigungselemente auch hier durch die Plankerbverzahnung.

Bevorzugt ist die Nabe über eine Kupplungsverzahnung mit der Sonnenwelle verbunden und insbesondere gegen bezogen auf die Hauptdrehachse axiale Verschiebung gesichert, wodurch sich ein einfacher und stabiler Aufbau ergibt.

Weitere Merkmale und Vorteile der vorliegenden Erfindung werden anhand der nachfolgenden Beschreibung unter Bezugnahme auf die beiliegende Beschreibung deutlich. Darin ist
- FIG 1: eine schematische Schnittansicht eines Bereiches eines Planetengetriebes gemäß einer Ausfuhrüngsform der vorliegenden Erfindung;
- FIG 2: eine schematische Schnittansicht eines Bereiches eines Planetengetriebes gemäß einer nicht beanspruchten Ausführungsform;
- FIG 3: eine geschnittene Seitenansicht einer Ausführungsform einer erfindungsgemäßen Windkraftanlage mit erfindungsgemäßem Planetengetriebe;
- FIG 4: eine schematische Darstellung einer Ausführungsform eines erfindungsgemäßen Antriebsstrangs und
- FIG 5: eine schematische Darstellung einer Ausführungsform einer erfindungsgemäßen Industrie-Applikation.

Gleiche Bezugsziffern bezeichnen nachfolgend gleiche oder gleichartig ausgebildete Bauteile oder Bauteilbereiche.

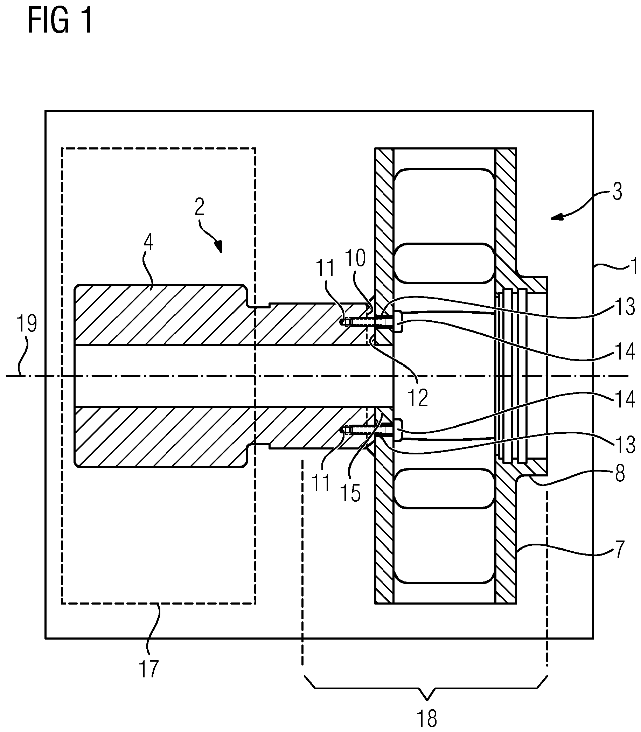

FIG 1 zeigt Komponenten eines Planetengetriebes 1 gemäß einer Ausführungsform der vorliegenden Erfindung, genauer gesagt eine einteilig als Hohlwelle ausgebildete Sonnenwelle 2 einer Planetenstufe 17 und einen mit dieser verbundenen, vorliegend ebenfalls einteilig ausgebildeten Planetenträger 3 einer auf diese Planetenstufe 17 folgenden weiteren Planetenstufe 18. Die Sonnenwelle 2 ist an ihrem ersten freien Ende mit einer Sonnenverzahnung 4 versehen. Am zweiten freien Ende ist stirnseitig eine Stirnverzahnung 10 mit sich bezogen auf eine Hauptdrehachse 19 des Planetengetriebes 1 zumindest im Wesentlichen radial erstreckenden Zähnen ausgebildet, die einen ersten Teil einer Plankerbverzahnung definiert. Ferner ist am zweiten freien Ende der Sonnenwelle 2 stirnseitig eine Vielzahl von Gewindebohrungen 11 angeordnet, die sich in bezogen auf die Hauptdrehachse 19 axialer Richtung durch die Stirnverzahnung 10 erstrecken und vorliegend in gleichmäßigen Abständen entlang eines Lochkreises positioniert sind. Der Planetenträger 3 definiert an seinem ersten, der Sonnenwelle 2 zugewandten freien Ende eine Stirnverzahnung 12 mit sich bezogen auf die Hauptdrehachse 19 zumindest im Wesentlichen radial erstreckenden Zähnen, die entsprechend der Stirnverzahnung 10 der Sonnenwelle 2 ausgebildet ist und den zweiten Teil der Plankerbverzahnung definiert. Entsprechend kann die Stirnverzahnung 12 des Planetenträgers 3 bezogen auf die Hauptdrehachse 19 axial derart auf die Stirnverzahnung 10 der Sonnenwelle 2 aufgesetzt werden, dass die Sonnenwelle 2 und der Planetenträger 3 relativ zueinander zentriert, drehfest miteinander verbunden und bezogen auf die Hauptdrehachse 19 in radialer Richtung sowie in Umfangsrichtung gesichert werden. Im Bereich der Stirnverzahnung 12 sind den Gewindebohrungen 11 der Sonnenwelle 2 entsprechende Durchgangsbohrungen 13 ausgebildet, durch die von außen Befestigungselemente 14, vorliegend in Form von Befestigungsschrauben eingesetzt und in die Gewindebohrungen 11 geschraubt sind. Damit die Durchgangsbohrungen 13 des Planetenträgers 3 von außen zugänglich sind, sind die Stirnverzahnung 12 und die Durchgangsbohrungen 13 an einem bezogen auf die Hauptdrehachse 19 radial einwärts vorstehenden Ringflansch 15 vorgesehen, der derart bemessen ist, dass die Befestigungselemente 14 ausgehend vom dem der Sonnenwelle 2 abgewandten freien Ende des Planetenträgers 3 in die Durchgangsbohrungen 13 eingesetzt werden können. Im Übrigen weist der Planetenträger 3 einen Planetenradaufnahmeabschnitt 7 und einen Endabschnitt 8 auf.

Der in FIG 1 dargestellte Aufbau zeichnet sich insbesondere dadurch aus, dass dank der Tatsache, dass die Drehmomentübertragung durch eine die Sonnenwelle 2 und den Planetenträger 3 miteinander verbindende Plankerbverzahnung erfolgt, bezogen auf die Hauptdrehachse 19 wenig radialer Bauraum benötigt wird. Darüber hinaus kann auch die Sonnenwelle 2 sehr kurz ausgeführt sein, um zusätzlich axialen Bauraum zu gewinnen. Noch ein weiterer Vorteil, der mit dem in FIG 1 dargestellten Aufbau einhergeht, besteht darin, dass sich der Planetenträger 3 einfach und preiswert herstellen und bearbeiten lässt. Dies liegt zum einen daran, dass Dank der Stirnverzahnung 10, 12 wenig Material benötigt wird. Zum anderen ist der Planetenträger 3 für eine maschinelle Bearbeitung aber auch sehr gut zugänglich. So lassen sich Ölkanäle oder dergleichen sehr einfach in den Planetenträger 3 einbringen.

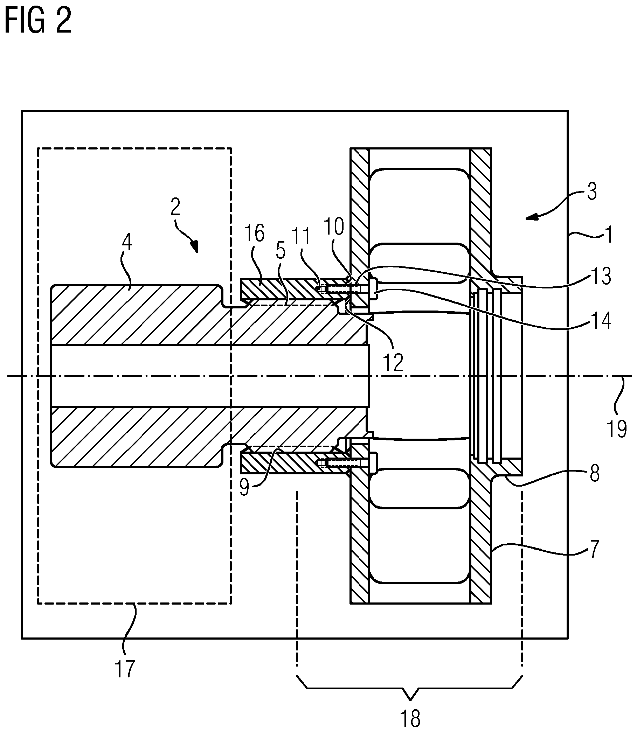

FIG 2 zeigt Komponenten eines Planetengetriebes 1 gemäß einer nicht beanspruchten Ausführungsform, genauer gesagt eine einteilig als Hohlwelle ausgebildete Sonnenwelle 2 einer Planetenstufe 17 und einen mit dieser mittelbar über eine Nabe 16 verbundenen, vorliegend ebenfalls einteilig ausgeführten Planetenträger 3 einer benachbarten weiteren Planetenstufe 18. Die Sonnenwelle 2 umfasst eine am ersten freien Ende angeordnete Sonnenverzahnung 4 und eine am zweiten freien Ende vorgesehene Außenumfangsverzahnung 5, deren Zähne sich bezogen auf die Hauptdrehachse 19 in axialer Richtung erstrecken. Die Nabe 16 ist ringförmig ausgebildet und ist entlang ihres Innenumfangs mit einer der Außenumfangsverzahnung 5 der Sonnenwelle 2 entsprechenden Innenumfangsverzahnung 9 versehen. Entsprechend lässt sich die Nabe 16 bezogen auf die Hauptdrehachse 19 axial auf die Sonnenwelle 2 aufschieben, wobei ihre Innenumfangsverzahnung 9 mit der Außenumfangsverzahnung 5 der Sonnenwelle 2 derart in Eingriff gebracht wird, dass die Nabe 16 bezogen auf die Hauptdrehachse 19 in radialer Richtung sowie in Umfangsrichtung an der Sonnenwelle 2 gesichert ist. Eine axiale Sicherung kann beispielsweise über einen Sicherungsring, über Befestigungsschrauben oder dergleichen erfolgen. Die Nabe 16 ist an ihrer zum Planetenträger 3 weisenden Stirnseite mit einer Stirnverzahnung 10 versehen, die einen ersten Teil einer Plankerbverzahnung definiert. Der zweite Teil der Plankerbverzahnung ist stirnseitig am Planetenträger 3 in Form einer Stirnverzahnung 12 ausgebildet. Die Befestigung des Planetenträgers 3 an der Nabe 16 erfolgt ähnlich wie bei der in FIG 2 beschriebenen ersten Ausführungsform über sich bezogen auf die Hauptdrehachse 19 axial erstreckende Befestigungselemente 13, vorliegend in Form von Befestigungsschrauben, die durch im Planetenträger 3 vorgesehene Durchgangsbohrungen 13 geführt und in Gewindebohrungen 11 geschraubt sind, die stirnseitig an der Nabe 16 im Bereich der Stirnverzahnung 10 ausgebildet sind. Entsprechend kann der Planetenträger 3 bezogen auf die Hauptdrehachse 19 axial auf die Sonnenwelle 2 aufgeschoben werden, bis die Stirnverzahnungen 12 des Planetenträgers und die Stirnverzahnung 10 der Nabe 16 miteinander in Eingriff gebracht werden, wodurch auch hier eine Sicherung in bezogen auf die Hauptdrehachse 19 radialer Richtung sowie in Umfangsrichtung erzielt wird.

Die in FIG 2 dargestellte Bauart ermöglicht aufgrund der Trennung von Nabe 16 und Planetenträger 3 dank der besseren Zugänglichkeit der Einzelkomponenten eine einfache und preiswerte Herstellung und Bearbeitung derselben. Zudem können die Bearbeitung der Nabe 16 und die des Planetenträgers 3 getrennt beauftragt und so Bearbeiter ausgewählt werden, die für die jeweilige Bearbeitung optimal aufgestellt sind. Auch können Logistikkosten eingespart werden, da nicht der gesamte Planetenträger 3 über weite Strecken transportiert werden muss.

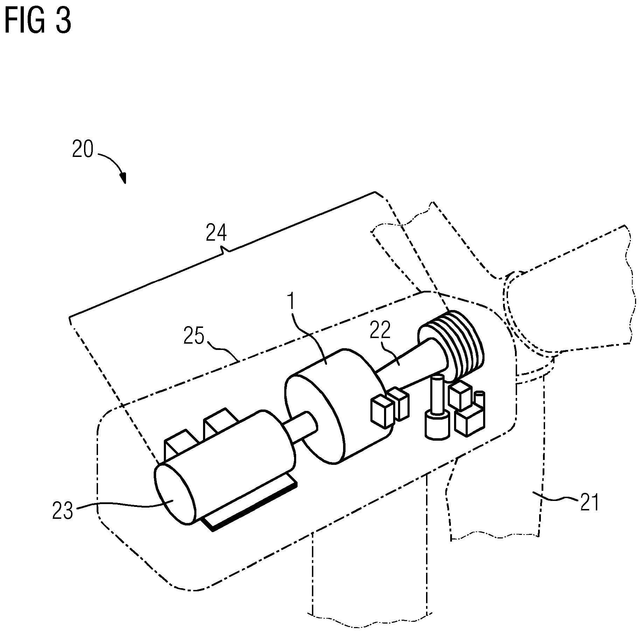

In FIG 3 ist in einer geschnittenen Schrägansicht eine Ausführungsform einer erfindungsgemäßen Windkraftanlage 20 dargestellt. Die Windkraftanlage 20 umfasst einen Rotor 21, der durch Wind in Drehung versetzbar ist. Der Rotor 21 ist über eine Rotorwelle 22 mit einem erfindungsgemäßen Planetengetriebe 1 drehmomentübertragend verbunden. Das Planetengetriebe 1 wiederum ist drehmomentübertragend mit einem Generator 23 verbunden. Die Rotorwelle 22, das Planetengetriebe 1 und der Generator 23 gehören zu einem Antriebsstrang 24, der in einer Gondel 25 der Windkraftanlage 20 aufgenommen ist. Der Generator 23 weist zwei, drei oder vier Polpaare auf. Dank des Planetengetriebes 1 weist der Antriebsstrang 24 kleine Abmessungen auf, was beispielsweise die Montage der Windkraftanlage 20 erleichtert. Auch kann der Antriebsstrang 24 preiswert hergestellt werden.

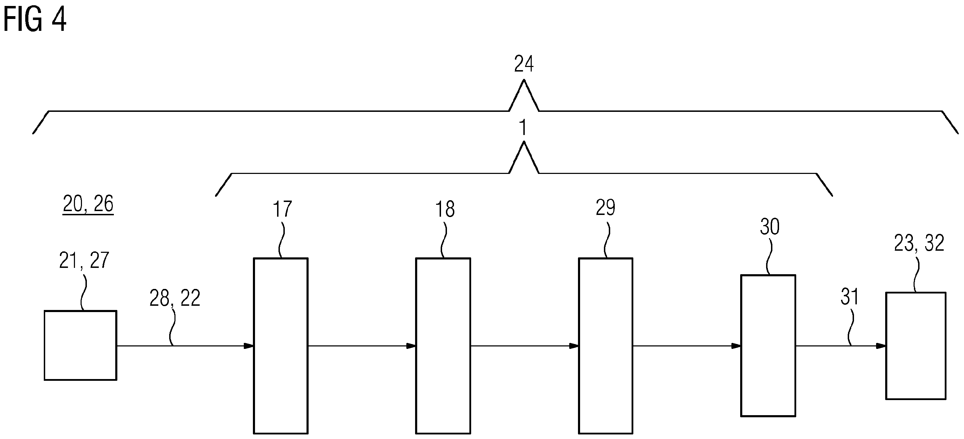

FIG 4 zeigt einen schematischen Aufbau einer weiteren Ausführungsform des erfindungsgemäßen Antriebsstrangs 24, der in einer nicht näher dargestellten Windkraftanlage 20 oder einer nicht näher dargestellten Industrie-Applikation 26 einsetzbar ist. Der Antriebsstrang 24 umfasst ein erfindungsgemäßes Planetengetriebe 1, das eingangsseitig mit einem Antriebsmittel 27 oder einem Rotor 21 der Windkraftanlage 20 verbunden ist und dem so eine Antriebsleistung 28 zugeführt wird. In einer Windkraftanlage 20 erfolgt dies mittels einer Rotorwelle 22. Das Planetengetriebe 1 umfasst vorliegend drei Planetenstufen 17, 18 und 29, die hintereinander angeordnet, und eine letzte als Stirnradstufe ausgebildete Getriebestufe 30 und erfindungsgemäß miteinander verbunden sind. Die Getriebestufen 17, 18, 29 und 30 geben eine Abtriebsleistung 31 an einen Generator 23 oder eine mechanische Anwendung 32 ab.

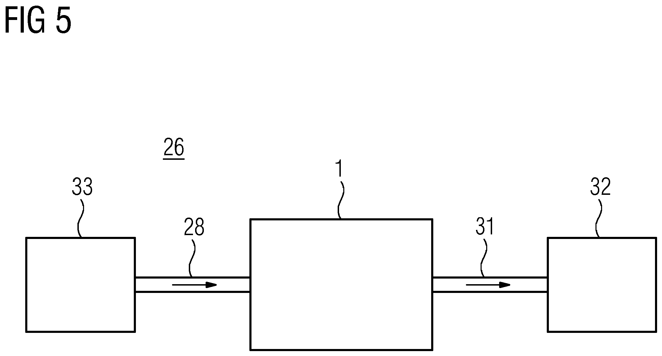

In FIG 5 ist schematisch der Aufbau einer Ausführungsform einer Industrie-Applikation 26 dargestellt, die über ein Antriebsmittel 33 verfügt. Das Antriebsmittel 33 ist dazu ausgebildet, eine Antriebsleistung 28 bereitzustellen, die durch eine drehmomentübertragende Verbindung an ein erfindungsgemä-ßes Getriebe 1 transportiert wird. Das Getriebe 1 wiederum ist drehmomentübertragend mit einer mechanischen Anwendung 32 verbunden, um eine Abtriebsleistung 31 zur mechanischen Anwendung 32 zu transportieren. Das Getriebe 1 ist dazu als ein Planetengetriebe 1 nach einer der oben skizzierten Ausführungsformen ausgebildet.

## Patentansprüche

1. Planetengetriebe (1) mit zumindest zwei Planetenstufen, wobei eine Sonnenwelle (2) einer Planetenstufe zur Drehmomentübertragung über eine Kupplungsverzahnung mit einem Planetenträger (3) einer auf diese Planetenstufe folgenden weiteren Planetenstufe verbunden ist, **dadurch gekennzeichnet, dass** es sich bei der Kupplungsverzahnung um eine Plankerbverzahnung handelt, wobei die die Plankerbverzahnung bildenden Stirnverzahnungen (10, 12) einerseits an einer Stirnseite der Sonnenwelle (2) und andererseits an einer bezogen auf eine Hauptdrehachse (19) axial an dieser Stirnseite der Sonnenwelle (2) anliegenden Stirnseite des Planetenträgers (3) vorgesehen sind, wobei die Sonnenwelle (2) und der Planetenträger (3) unter Verwendung von sich bezogen auf die Hauptdrehachse (19) axial erstreckenden Befestigungselementen (14) aneinander befestigt sind, die bevorzugt in regelmäßigen Abständen zueinander positioniert sind, wobei sich die Befestigungselemente (14) durch die Plankerbverzahnung erstrecken.

2. Antriebsstrang (24), umfassend eine Rotorwelle (22), die drehmomentübertragend mit einem Getriebe des Antriebsstranges (24) verbunden ist, das wiederum drehmomentübertragend mit einem Generator (23) des Antriebsstranges (24) verbunden ist, **dadurch gekennzeichnet, dass** das Getriebe als Planetengetriebe (1) nach Anspruch 1 ausgebildet ist.

3. Windkraftanlage (20), umfassend einen Rotor (21), der an einer Gondel (25) angebracht ist, wobei in der Gondel (25) ein Antriebsstrang (24) angeordnet ist, der drehmomentübertragend mit dem Rotor (21) verbunden ist, **dadurch gekennzeichnet, dass** der Antriebsstrang (24) nach Anspruch 2 ausgebildet ist.

4. Industrie-Applikation (26), umfassend ein Antriebsmittel (27), das mit einem Getriebe (1) der Industrie-Applikation drehrmomentübertragend verbunden ist, das mit einer mechanischen Anwendung (32) der Industrie-Applikation (26) drehmomentübertragend gekoppelt ist, **dadurch gekennzeichnet, dass** das Getriebe (1) als Planetengetriebe (1) nach Anspruch 1 ausgebildet ist.

## Claims

1. Planetary transmission (1) having at least two planetary stages, wherein a sun shaft (2) of a planetary stage is connected for the transmission of torque via a coupling toothing system to a planet carrier (3) of a further planetary stage that follows said planetary stage, **characterized in that** the coupling toothing system is a flat-notch toothing system, wherein the spur toothing systems (10, 12) that form the flat-notch toothing system are provided firstly on an end side of the sun shaft (2) and secondly on an end side of the planet carrier (3) that bears against said end side of the sun shaft (2) axially in relation to a main axis of rotation (19), wherein the sun shaft (2) and the planet carrier (3) are fastened to one another using fastening elements (14) that extend axially in relation to the main axis of rotation (19) and are preferably positioned at regular spacings from one another, wherein the fastening elements (14) extend through the flat-notch toothing system.

2. Drivetrain (24), comprising a rotor shaft (22), which is connected in a torque-transmitting manner to a transmission of the drivetrain (24), which is in turn connected in a torque-transmitting manner to a generator (23) of the drivetrain (24), **characterized in that** the transmission is configured as a planetary transmission (1) according to Claim 1.

3. Wind turbine (20), comprising a rotor (21), which is attached to a nacelle (25), wherein a drivetrain (24), which is connected in a torque-transmitting manner to the rotor (21), is arranged in the nacelle (25), **characterized in that** the drivetrain (24) is configured according to Claim 2.

4. Industrial application (26), comprising a drive means (27), which is connected in a torque-transmitting manner to a transmission (1) of the industrial application (26), said transmission being coupled in a torque-transmitting manner to a mechanical application (32) of the industrial application (26), **characterized in that** the transmission (1) is configured as a planetary transmission (1) according to Claim 1.

## Revendications

1. Engrenage planétaire (1) comprenant au moins deux étages planétaires, dans lequel un arbre solaire (2) d'un étage planétaire est relié, pour une transmission de couple, par une denture d'accouplement à un porte-planétaires (3) d'un autre étage planétaire suivant cet étage planétaire, **caractérisé en ce que** la denture d'accouplement est une denture plane, les dentures frontales (10, 12) qui forment la denture plane étant prévues d'une part sur une face frontale de l'arbre solaire (2) et d'autre part sur une face frontale du porte-planétaires (3) s'appliquant axialement contre cette face frontale de l'arbre solaire (2) par rapport à un axe de rotation principal (19), l'arbre solaire (2) et le porte-planétaires (3) étant fixés l'un à l'autre en utilisant des éléments de fixation (14) s'étendant axialement par rapport à l'axe de rotation principal (19), qui sont positionnés de préférence à des distances régulières les uns par rapport aux autres, les éléments de fixation (14) s'étendant à travers la denture plane.

2. Chaîne cinématique (24), comprenant un arbre de rotor (22), qui est relié de manière à transmettre le couple à un engrenage de la chaîne cinématique (24), qui est lui-même relié de manière à transmettre le couple à un générateur (23) de la chaîne cinématique (24), **caractérisée en ce que** l'engrenage est conçu sous la forme d'un engrenage planétaire (1) selon la revendication 1.

3. Éolienne (20), comprenant un rotor (21), qui est monté sur une nacelle (25), une chaîne cinématique (24) étant agencée dans la nacelle (25), laquelle est reliée au rotor (21) de manière à transmettre le couple, **caractérisée en ce que** la chaîne cinématique (24) est réalisée selon la revendication 2.

4. Application industrielle (26), comprenant un moyen d'entraînement (27) qui est relié à un engrenage (1) de l'application industrielle (26) de manière à transmettre le couple, lequel est relié à une application mécanique (32) de l'application industrielle (26) de manière à transmettre le couple, **caractérisée en ce que** l'engrenage (1) est conçu sous la forme d'un engrenage planétaire (1) selon la revendication 1.
